# EUROPÄISCHE PATENTANMELDUNG

(11) **EP 1 278 054 A1**
(43) Veröffentlichungstag der Anmeldung: **22.01.2003**
(21) Anmeldenummer: 02100770.3
(22) Anmeldetag: 01.07.2002
(51) Int. Cl.: G01N 1/06, B65D 83/08, B65D 83/10

(54) **Spender für dünne Messer, insbesondere für Mikrotommesser**

(30) Priorität: 11.07.2001 DE 20111599 U
(71) Anmelder: Leica Microsystems Nussloch GmbH, 69226 Nussloch b. Heidelberg (DE)
(72) Erfinder: Graupner, Dag, 69214, Eppelheim (DE)
(74) Vertreter: Reichert, Werner F., Dr.

(57) **Zusammenfassung**

Es wird ein Spender (1) für dünne Messer, insbesondere für dünne Austausch-Mikrotommesser (2), mit einem Gehäuse (3) zur Aufnahme von mehreren, übereinander angeordneten Messern (2) beschrieben. Der Messerstapel (5) wird von einer Feder (6) gegen den Gehäusedeckel (7) gedrückt. Ein Schieber (8) zum Ausschieben eines einzelnen Messers (2) durch eine Öffnung (9) ist in der Wand des Gehäuses (3) vorgesehen, wobei die Öffnung (9) in einer Längswand (10) des Gehäuses (3) angeordnet ist. Das Messer (2) wird entlang seiner Längsausdehnung vom Schieber (8) derart aus dem Gehäuse (3) geschwenkt, dass die Messerschneide (11) nach dem Ausschwenken in die Richtung der Öffnung (9) zeigt.

## Beschreibung

Die Erfindung betrifft einen Spender für dünne Messer, insbesondere für dünne Austausch-Mikrotommesser, gemäß dem Oberbegriff des Anspruchs 1.

Dünne Messer, insbesondere dünne Austausch-Mikrotommesser, werden als sogenannte "Einwegklingen" zum Schneiden von Präparaten mit einem Mikrotom für eine nachfolgende mikroskopische Untersuchung genutzt. Die Austausch-Mikrotommesser werden dabei von speziellen Messerhaltern aufgenommen und dort geklemmt. Der gesamte Messerhalter wird zum Schneiden der Präparate von einer Haltevorrichtung am Mikrotom aufgenommen.

Die Austausch-Mikrotommesser haben nur eine begrenzte Standzeit. Bei nachlassender Schneidleistung müssen die Messer ausgetauscht werden. Die Austausch-Mikrotommesser werden im Handel in sogenannten "Spendern" angeboten. Dazu sind mehrere Messer übereinanderliegend in einem Gehäuse angeordnet und lassen sich von dort aus einzeln entnehmen.

Ein derartiger Spender für dünne Austausch-Mikrotommesser ist zusammen mit einem Messerhalter in der DE 28 52 373 C2 dargestellt und beschieben. Der Spender zeichnet sich dadurch aus, dass in einem quaderförmigen, geschlossenen Gehäuse, ein Stapel aus einzelnen, übereinander angeordneten Austausch-Mikrotommessern von einer Blattfeder gegen den Deckel des Gehäuses gedrückt wird. Im Deckel ist ein Schieber vorgesehen über den ein einzelnes Messer über einen, in der stirnseitigen Wand des quaderförmigen Gehäuses angeordneten Schlitz ausschiebbar angeordnet ist.

Über einen angeformten Bolzen am Spender und ein entsprechendes Sackloch im Messerhalter, lässt sich das Messer direkt in den Messerhalter einschieben. Dies setzt jedoch voraus, dass der Messerhalter von der Seite aus zugänglich ist. Außerdem lässt sich dieser Spender nur an einem speziellen Messerhalter ansetzen. Wird kein spezieller Messerhalter verwendet, müssen die Klingen nach dem Ausschieben aus dem Messerhalter mit der Hand entnommen und in den Messerhalter manuell eingesetzt werden. Da die Messerschneide nach dem Ausschieben völlig ungeschützt aus dem Spender heraussteht, ist hier ein erhöhtes Verletzungsrisiko gegeben.

Es ist daher Aufgabe der vorliegenden Erfindung, einen derartigen Spender für Austausch-Mikrotommesser so zu verbessern, dass das Verletzungsrisiko bei der manuellen Entnahme des Messers minimiert wird.

Diese Aufgabe wird erfindungsgemäß durch die kennzeichnenden Merkmale des Anspruchs 1 gelöst. Vorteilhafte Weiterbildungen sind Gegenstand der Unteransprüche.

Die Erfindung zeichnet sich dadurch aus, dass der Spender für dünne Austausch-Mikrotommesser in einer der beiden Längswänden des Gehäuses eine Öffnung aufweist, die so dimensioniert ist, dass das Messer entlang seiner Längsausdehnung in einer Schwenkbewegung von Schieber aus dem Gehäuse geschoben wird. Dabei zeigt die Messerschneide immer in die Richtung der Öffnung, so dass das Messer an seiner ungefährlichen Rückenschmalfläche angefasst und in einen Messerhalter eingelegt werden kann.

In einer Ausgestaltung der Erfindung ist es vorgesehen, dass der Messerrücken des Austausch-Mikrotommessers mindestens ein Loch oder mindestens eine Vertiefung für einen Rastbolzen aufweist. Es hat sich jedoch von Vorteil erwiesen, wenn der Messerrücken eine fortlaufende Reihe aus nebeneinander angeordneten Löchern und/oder Vertiefungen aufweist. Bei der Messerherstellung kann ein "Endlosstahlband" planer über einer Schleifmaschine zum Schleifen der Messerschneide geführt und anschließend auf die gewünschte Messerlänge abgeschnitten zu werden.

Es ist vorgesehen, dass der Schieber einen Rastbolzen zum Eingriff in das Loch oder die Vertiefung am Messer aufweist. Durch eine Betätigung des Schiebers wird das Messer ausgeschoben.

Zur sichereren Handhabung ist der Schieber mit einer Mulde versehen, über die ein verbesserter Fingerkontakt mit dem Schieber gegeben ist.

In einer weiteren Ausgestaltung der Erfindung ist der Schieber in einer Nut im Deckel des Gehäuses geführt, wobei die Nut schräg zur Messerschneide angeordnet ist. Damit wird erreicht, dass das Messer mit einem Messerende aus dem Gehäuse geschwenkt wird und mit dem anderen Messerende im Gehäuse verbleibt. Es kann auch vorgesehen sein, dass die Schiebernut außerhalb der Messermitte im Gehäuse angeordnet ist.

In einer weiteren Ausgestaltung der Erfindung ist dem Spalt zum Ausschwenken der Klinge im Gehäuse eine tieferliegende Auflagefläche für die Klinge zugeordnet. Das hat den Vorteil, dass die Klinge während des Ausschwenkens sicher geführt wird und außerdem nach dem teilweisen Ausschwenken sicher an der Auflage gehalten werden kann.

Ferner ist es vorgesehen, dass der Auflagefläche ein Anschlag zur Bewegungsbegrenzung des ausschwenkbaren Messers zugeordnet ist. Damit wird verhindert, dass sich das Messer nach dem Ausschwenken ungewollt verschieben kann, da es auf der einen Seite vom Schieber geführt und auf der anderen Seite auf der Auflagefläche gegen einen Anschlag anliegt.

Die Erfindung wird in einem Ausführungsbeispiel anhand der schematischen Zeichnungen dargestellt und näher erläutert. Es zeigen:
- Fig. 1:: Eine Ansicht des Spenders mit ausgeschwenktem Austausch-Mikrotommesser
- Fig. 2:: eine Ansicht des Spenders mit abgenommenen Deckel
- Fig. 3:: einen Schnitt durch den Spender

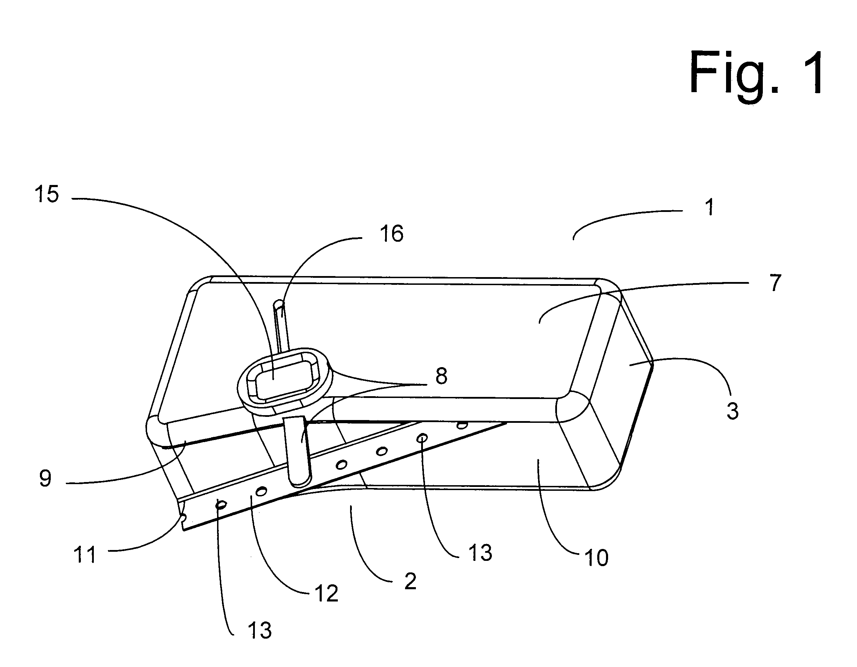

Die Figur 1 zeigt eine Ansicht eines Spenders 1 mit einem Gehäuse 3, einem Gehäusedeckel 7 und einer, in einer Längswand 10 des Gehäuses 3 vorgesehenen Öffnung 9. Im Gehäusedeckel 7 ist eine Nut 16 zur Führung eines Schiebers 8, der zur besseren Handhabung eine Mulde 15 aufweist, angeordnet. Über den Schieber 8 wird ein Austausch-Mikrotommesser 2 aus dem Inneren des Gehäuses 3 ausgeschwenkt.

Das Austausch-Mikrotommesser 2 weist eine Messerschneide 11 auf, die im ausgeschwenktem Zustand des Messers 2 der Längswand 10 des Gehäuses 3 bzw. der Öffnung 9 gegenüberliegt. Das Messer 2 weist in seinem Messerrücken 12 nebeneinander angeordnete und zueinander gleich beabstandete Löcher 13 auf. In eines dieser Löcher 13 greift ein, hier nicht mit dargestellter, Rastbolzen 14 des Schiebers 8 ein.

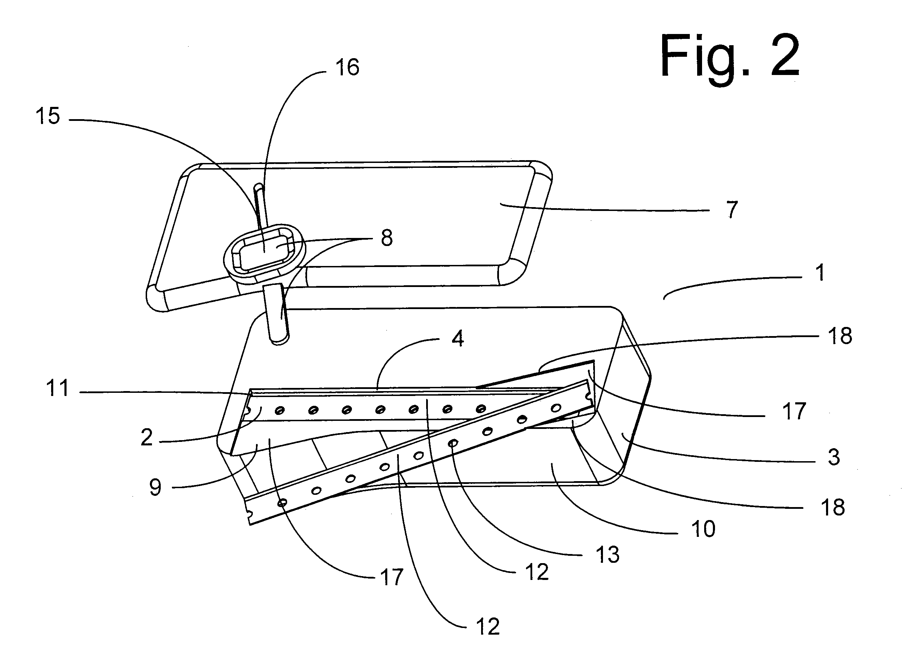

Die Figur 2 zeigt eine Ansicht des Spenders 1 mit abgenommenen Gehäusedeckel 7. Im Gehäuse 3 ist eine Messerstapelaufnahme 4 für mehrere übereinander angeordnete Messer 2 vorgesehen. Der Öffnung 9 ist eine Auflagefläche 17 zur Führung und Anlage des auszuschwenkenden Messers 2 vorgesehen. Die Auflagefläche 17 weist an ihrem dem Schieber 8 gegenüberliegenden Ende einen Anschlag 18 als Bewegungsbegrenzung für das ausgeschwenkte Messer 2 auf.

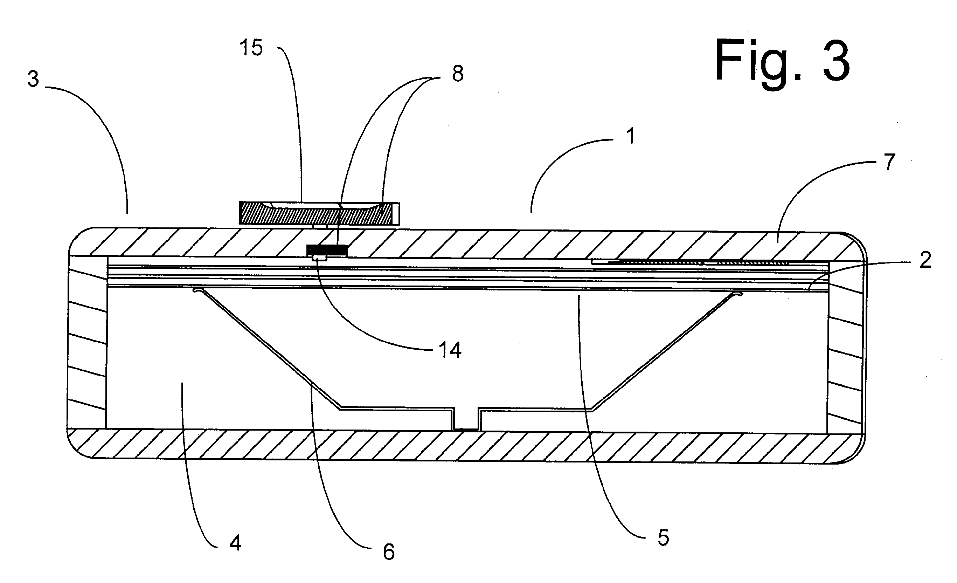

Die Figur 3 zeigt einen Schnitt durch das Gehäuse 3 mit dem Gehäusedeckel 7, in dem der Schieber 8 geführt ist. Der Schieber 8 weist einen angeformten Rastbolzen 14 zum Eingriff in die hier nicht mit dargestellten Löcher des Austausch-Mikrotommessers 2 auf.

Das Innere des Gehäuses 3 weist die Messerstapelaufnahme 4 auf, in der ein Messerstapel 5 aus einzelnen, übereinander angeordneten Messern 2 vorgesehen ist. Der Messerstapel 5 steht in kraftschlüssiger Verbindung mit einer Feder 6 und wird von dieser gegen den Gehäusedeckel 7 gedrückt.

Der Rastbolzen 14 greift in ein Loch 13 des Messers 2 ein. Über den Schieber 8 wird das Messer 2 manuell gegen den Anschlag 18 ausgeschwenkt. Nach der Entnahme des Messers 2 kann der Schieber 8 in seine Ausgangsposition zurückgeschoben werden. Der Rastbolzen 14 greift nun in ein Loch 13 des jetzt obenliegenden Messers 2 ein.

Die Erfindung ist nicht auf das beschriebene Ausführungsbeispiel beschränkt, sondern es können neben den beschriebenen Austausch-Mikrotommessern auch Teppichmesserklingen, Rasierklingen, Cuttermesserklingen oder ähnlich dünne Klingen eingesetzt werden.

### Bezugszeichenliste

- 1 -: Spender
- 2 -: Austausch-Mikrotommesser
- 3 -: Gehäuse
- 4 -: Messerstapelaufnahme
- 5 -: Messerstapel
- 6 -: Feder
- 7 -: Gehäusedeckel
- 8 -: Schieber
- 9 -: Öffnung
- 10 -: Längswand von 3
- 11 -: Messerschneide
- 12-: Messerrücken
- 13-: Loch
- 14 -: Rastbolzen
- 15-: Mulde
- 16-: Nut
- 17 -: Auflagefläche
- 18-: Anschlag

## Patentansprüche

1. Spender (1) für dünne Messer, insbesondere für dünne Austausch-Mikrotommesser (2), mit einem Gehäuse (3) zur Aufnahme von mehreren, übereinander angeordneten Messern (2), wobei der Messerstapel (5) von einer Feder (6) gegen den Gehäusedeckel (7) gedrückt wird und ein Schieber (8) zum Ausschieben eines einzelnen Messers (2) durch eine Öffnung (9) in der Wand des Gehäuses (3) vorgesehen ist, **dadurch gekennzeichnet, dass** die Öffnung (9) in einer Längswand (10) des Gehäuses (3) angeordnet ist, das Messer (2) entlang seiner Längsausdehnung vom Schieber (8) derart aus dem Gehäuse (3) geschwenkt wird, dass die Messerschneide (11) nach dem Ausschwenken in die Richtung der Öffnung (9) zeigt.

2. Spender (1) für dünne Messer nach Anspruch 1, **dadurch gekennzeichnet, dass** der Messerrücken (12) des Messers (2) mindestens ein Loch (13) und/oder mindestens eine Vertiefung aufweist.

3. Spender (1) für dünne Messer nach Anspruch 2 , **dadurch gekennzeichnet, dass** der Schieber (8) einen Rastbolzen (14) zum Eingriff in das Loch (13) oder in die Vertiefung am Messer (2) aufweist.

4. Spender (1) für dünne Messer nach Anspruch 1, **dadurch gekennzeichnet, dass** der Schieber (8) zur sichereren Handhabung eine Mulde (15) aufweist.

5. Spender (1) für dünne Messer nach Anspruch 1, **dadurch gekennzeichnet, dass** der Schieber (8) in einer Nut (16) im Deckel (7) des Gehäuses (3) geführt ist.

6. Spender (1) für dünne Messer nach Anspruch 5, **dadurch gekennzeichnet, dass** die Nut (16) schräg zur Messerschneide (11) angeordnet ist.

7. Spender (1) für dünne Messer nach Anspruch 5 oder Anspruch 6, **dadurch gekennzeichnet, dass** die Nut (16) außerhalb der Messermitte im Gehäusedeckel (7) angeordnet ist.

8. Spender (1) für dünne Messer nach Anspruch 1, **dadurch gekennzeichnet, dass** der Öffnung (9) zum Ausschwenken des Messers (2) im Gehäuse (3) eine tieferliegende Auflagefläche (17) zugeordnet ist.

9. Spender (1) für dünne Messer nach Anspruch 8, **dadurch gekennzeichnet, dass** der Auflagefläche (17) ein Anschlag (18) zur Bewegungsbegrenzung des ausschwenkbaren Messers (2) zugeordnet ist.
